# EUROPÄISCHE PATENTSCHRIFT

(11) **EP 1 662 627 B1**
(45) Veröffentlichungstag und Bekanntmachung des Hinweises auf die Patenterteilung: **11.02.2009**
(21) Anmeldenummer: 05025951.4
(22) Anmeldetag: 29.11.2005
(51) Int. Cl.: H02B 1/052

(54) **Klemmvorrichtung zur lösbaren Befestigung eines Gerätegehäuses an einer Profilschiene**
Device for detachably fixing an apparatus housing to a mounting rail
Dispositif pour la fixation détachable d'un boîtier d'appareil à un rail profilé

(30) Priorität: 30.11.2004 DE 102004057705
(43) Veröffentlichungstag der Anmeldung: 31.05.2006
(73) Patentinhaber: BLOCK Transformatoren-Elektronik GmbH & Co. KG, 27283 Verden (DE)
(72) Erfinder: Römhild, Rudolf, 27283 Verden/Aller (DE); Thiel, Udo Leonhard, 28870 Ottersberg (DE)
(74) Vertreter: Eisenführ, Speiser & Partner

(56) Entgegenhaltungen:
- EP-A- 0 715 383
- US-B1- 6 371 435

## Beschreibung

Die Erfindung betrifft eine Klemmvorrichtung zur lösbaren Befestigung eines Gerätegehäuses an einer Profilschiene, die an einer Wand- oder Bodenfläche angebracht ist, mit einer die Profilschiene zangenartig erfassenden Profilschienenklammer, welche einen Schienenhalter mit Führungsmitteln, ein Halteelement sowie ein Klemmteil aufweist, wobei das Klemmteil gegenüber dem Gerätegehäuse durch die Führungsmittel geführt in einer Profilschienenebene gleiten und in eine Klemmstellung und eine Öffnungsstellung gebracht werden kann.

Zur Wandbefestigung von Gerätegehäusen, z.B. von Schaltnetzteilen, wird bevorzugt die Kombination aus Profilschiene und Klemmvorrichtung verwendet, wobei die Profilschiene an einer Wand befestigt ist und die Klemmvorrichtung am zu befestigenden Gerätegehäuse. Die Klemmvorrichtung weist üblicherweise ein oder mehrere federkraftgespannte Klemmteile auf, die auf Führungsschienen gleiten und die Profilschiene zangenartig umfassen. Das Befestigen des Geräts geschieht durch Andrücken der Klemmvorrichtung an die Profilschiene, wodurch die federbelasteten Klemmteile aus einer Klemmstellung in eine Öffnungsstellung gebracht werden und bei Erreichen der Einbauposition hinter der Profilschiene wieder in ihre Klemmstellung schnappen und eine klemmende Verbindung herstellen. Gängige Ausführungsformen weisen ein Klemmteil und ein gegenüberliegendes Halteelement auf, wobei das Halteelement unter einer Schräglage des Gehäuses an der Profilschiene eingehakt und danach das Klemmteil durch Geradestellen des Gehäuses an der Profilschiene eingerastet wird. DE 41 27 252 A1 offenbart eine solche Vorrichtung.

In US 2003/0143896 A1 wird ferner eine Klemmvorrichtung gezeigt, welche eine Nocke aufweist, die um eine Achse parallel zur Profilschienenebene rotierbar ist. Diese Nocke dient dazu, zwei gegenüberliegende Klemmteile der Klemmvorrichtung in eine Öffnungs- oder eine Klemmstellung zu bringen, wobei in der Klemmstellung jeweils ein Vorsprung der Klemmteile unterhalb der Profilschiene eingreift. Weiterhin zeigt DE 102 43 383 B3 eine Klemmvorrichtung, in der ebenfalls eine Nocke angeordnet ist, welche zum eine zur Profilschienenebene parallele Achse drehbar ist. Diese Nocke dient zur Verschiebung eines einem Halteelement gegenüberliegenden Klemmteils in eine Öffnungs- oder eine Klemmstellung. Nachteilig bei den beiden letztgenannten Klemmvorrichtungen ist ihr vergleichsweise großer Raumbedarf aufgrund der zur Profilschienenebene parallelen Drehachsen der Nocken, wodurch sich die Nocke in einer Ebene senkrecht zur Profilschiene erstreckt.

In US 3,371,435 B1 wird eine Klemmvorrichtung gezeigt, bei der mit Hilfe einer Verstellnocke zwei federnde Klemmteile synchron in eine Öffnungs- oder Schließstellung gebracht werden. Ein damit zu befestigendes Gerätegehäuse an einer Profilschiene kann durch starkes Drücken des Gehäuse an die Profilschiene dort eingerastet werden, beim Lösen des Gerätegehäuses muss dieses jedoch gleichzeitig festgehalten werden und die Nocke muss die beiden Klemmteile in ihre Öffnungsstellung bringen. Dies ist insbesondere bei schwereren Gerätegehäusen von Nachteil.

Die Qualität der Verbindung von Gerätegehäusen mit Profilschienen ist abhängig von der Klemmkraft der Klemmvorrichtung: Zum Überdauern von Vibrationen und anderen äußeren Einwirkungen muss die Federkraft der Klemmteile relativ groß sein. Aus diesem Grunde müssen auch große Kräfte aufgewandt werden, um das Gerätegehäuse an der Profilschiene zu befestigen oder von ihr zu lösen. Dies kann weiter erschwert werden, wenn das Gerätegehäuse relativ groß ist und größenbedingt mehrere Klemmvorrichtungen aufweist. Zum Lösen mehrerer Klemmvorrichtungen eines Gehäuses müssen nacheinander alle Klemmteile entgegen ihrer Federkraftwirkung durch ein Werkzeug aus ihrer Klemmstellung geschoben werden. Das Gerät sollte dabei möglichst sukzessiv schräggestellt oder von der Profilschiene weggezogen werden, um ein Wiedereinrasten der Klemmteile zu verhindern. Dies macht den Ausbau größerer Geräte gerade auch dann umständlich, wenn nur eine Person den Ausbau durchführt. Da die gängigen Klemmvorrichtungen derart ausgestaltet sind, dass ein Kippen des Gehäuses zum Einrasten der Klemmteile in die Profilschienen notwendig ist, können relativ hohe Gehäuse nicht mittig an wandverschraubten Profilschienen befestigt werden, da die Bauart bei geringer Distanz zur Wand das Kippen bei mittig angeordneter Klemmvorrichtung nicht erlaubt.

Aufgabe der Erfindung ist es, eine Klemmvorrichtung zur lösbaren Befestigung eines Gerätegehäuses an einer Profilschiene zu schaffen, die eine sichere Verbindung ermöglicht, jedoch möglichst leicht zu fixieren und zu lösen ist und einen möglichst geringen Raumbedarf aufweist.

Die Aufgabe wird bei der eingangs angegebenen Klemmvorrichtung derart gelöst, dass zum Verschieben des Klemmteils in die Klemmstellung und die Öffnungsstellung an dem Schienenhalter eine um eine senkrecht zur Profilschienenebene liegende Achse drehbare Nocke angeordnet ist und ein Abschnitt des Klemmteils als Kulisse zur Führung des Klemmteils gegenüber der Nocke ausgebildet ist.

Ein Vorteil der erfindungsgemäßen Klemmvorrichtung gegenüber herkömmlichen Klemmvorrichtungen ist das Verbleiben des Klemmteils in seiner durch die Nocke eingestellten Position ohne selbständige Rückkehr in seine Klemmstellung. Eine Federkraft ist zum Verschieben des Klemmteils daher nicht mehr notwendig. Hierdurch wird das Befestigen und Lösen der Gehäuse insbesondere größerer Geräte mit mehreren Klemmvorrichtungen erleichtert, da die Klemmvorrichtungen vor dem Ein- oder Aushaken bequem geöffnet werden können. Das Einhaken geschieht ohne zusätzliche, von federkraftgespannten Klemmteilen hervorgerufene Kraftanstrengung. Ebenso entfällt beim Ablösen das sukzessive Schrägstellen des Gehäuses zum Verhindern des Wiedereinrastens der Klemmteile.

Ein weiterer Vorteil ist der größere mögliche Verstellweg des Klemmteils bei gleichbleibend geringer Verstellkraft im Vergleich zu herkömmlichen Ausführungen mit federkraftbelasteten Klemmteilen. Hierdurch kann der Abstand zwischen der Öffnungs- und der Klemmstellung des Klemmteils so groß gewählt werden, dass die geöffnete Klemmvorrichtung entsprechend viel Raum zur Aufnahme einer Profilschiene bietet, ohne dass das Gehäuse zum Einhaken schräggestellt werden muss. Hierdurch können auch größere Geräte nach Öffnen aller Klemmvorrichtungen senkrecht an der Profilschiene befestigt oder von ihr gelöst werden, ohne dass Hilfspersonen zum Öffnen und Halten der Klemmvorrichtungen benötigt werden. Außerdem können durch diesen Vorteil auch an höheren Gehäusen mittig Klemmvorrichtungen angeordnet werden, was bei herkömmlichen Klemmvorrichtungen durch die erforderliche Schrägstellung beim Einbau oder beim Lösen nicht möglich ist.

Ein zusätzlicher Vorteil ist der geringere Raumbedarf der drehbar angeordneten Nocke durch ihre zur Profilschienenebene senkrechte Drehachse. Die Nocke erstreckt sich nur innerhalb der Profilschienenebene und beansprucht bei ihrer Drehung keinen zusätzlichen Raum in einer Ebene senkrecht zur Profilschiene. Dadurch kann die Klemmvorrichtung insgesamt sehr flach ausgebildet werden, und Geräte, die mittels der Klemmvorrichtung an einer Profilschiene angebracht werden sollen, können ohne Abstand unmittelbar auf die Klemmvorrichtung montiert werden und weisen nur einen geringen, der Dicke der Klemmvorrichtung entsprechenden Abstand von der Profilschiene auf, was die Gewichtsbelastung der Profilschiene verringert.

Erfindungsgemäß ist ein Abschnitt des Klemmteils derart gestaltet, dass er der Nocke der Klemmvorrichtung als Kulisse dient. Ist die Nocke von der Kulisse umgeben, ruft sie durch Drehen um ihre Hochachse eine Verschiebung des Klemmteils zum Erreichen der Klemmstellung oder Öffnungsstellung hervor, wobei die Hochachse der Nocke vorzugsweise senkrecht zum Schienenhalter bzw. zur Klemmvorrichtung steht.

Des weiteren weist die Nocke gemäß einer vorteilhaften Ausgestaltung an ihrer profilschienenabgewandten Seite einen Vorsprung (z.B. einen Drehknopf oder einen Sechskantbolzen) oder eine Vertiefung, insbesondere einen Schlitz zur Aufnahme eines Hilfsmittels, zum Drehen um ihre senkrecht zur Profilschienenebene liegenden Hochachse auf. Das Hilfsmittel könnte beispielsweise ein gängiges Werkzeug sein, welches ohnehin beim Anschluss elektrischer Geräte verwendet wird, wie beispielsweise ein Schraubendreher, ein Innensechskantschlüssel und dergleichen.

Bei einer weiteren vorteilhaften Ausgestaltung der Erfindung weist die Kulisse des Klemmteils einen oder mehrere Endanschläge auf, die zum Begrenzen des Nockenwinkels auf einen vorbestimmten Bereich dienen, wobei unter den in dieser Art festgelegten Nockenwinkelgrenzen die Klemmstellung bzw. die Öffnungsstellung des Klemmteils erreicht werden.

In einer vorteilhaften Ausführungsform des Erfindungsgegenstandes weist das Klemmteil außerdem eine elastische Brücke auf, welche sich in dem Klemmteilabschnitt befindet, der der Nocke als Kulisse dient. Die elastische Brücke verbindet die Seitenwände der Kulisse und wird innerhalb des Nockenwinkelbereichs von der Nockenspitze berührt. Die elastische Brücke besitzt eine oder mehrere Rastkerben, in die die Nockenspitze bei Erreichen definierter Positionen, wie etwa der Klemmstellung, einrastet.

In einer weiteren vorteilhaften Ausführungsform des Erfindungsgegenstandes ist die Nocke geschlitzt, wodurch beim Verdrehen der Nocke aufgrund ihrer Verformung unter Berührung der Nockenspitze mit der elastischen Brücke ein möglichst gleichmäßiges Nockenverstelldrehmoment entsteht. Dadurch ist der Gegendruck beim Drehen annähernd gleichbleibend und verbessert so das Drehgefühl beim Festklemmen oder Lösen der Profilschienenklammer.

Weiterhin ist es günstig, dass der Schienenhalter, das Halteelement, das Klemmteil und die Nocke im Wesentlichen in einer gemeinsamen Ebene liegen. Dadurch ist die Klemmvorrichtung relativ flach und benachteiligt im Vergleich zu herkömmlichen Klemmvorrichtungen die an der Profilschiene zu befestigenden Geräte bezüglich des erforderlichen Raumbedarfs nicht.

Bevorzugte Ausführungsbeispiele der Erfindung sind in den Zeichnungen dargestellt und werden im folgenden näher beschrieben. Es zeigen:
- Fig. 1: eine Schnittzeichnung einer gängigen Klemmvorrichtung mit einer Profilschiene und einer Gehäusewand,
- Fig. 2: eine isometrische Ansicht einer vorteilhaften Ausführungsform der erfindungsgemäßen Klemmvorrichtung im montierten Zustand,
- Fig. 3: eine isometrische Explosionszeichnung einer vorteilhaften Ausführungsform der erfindungsgemäßen Klemmvorrichtung,
- Fig. 4: eine isometrische Ansicht einer weiteren vorteilhaften Ausführungsform der erfindungsgemäßen Klemmvorrichtung und
- Fig. 5: eine isometrische Ansicht einer vorteilhaften Ausführungsform der erfindungsgemäßen Klemmvorrichtung auf einer Profilschiene.

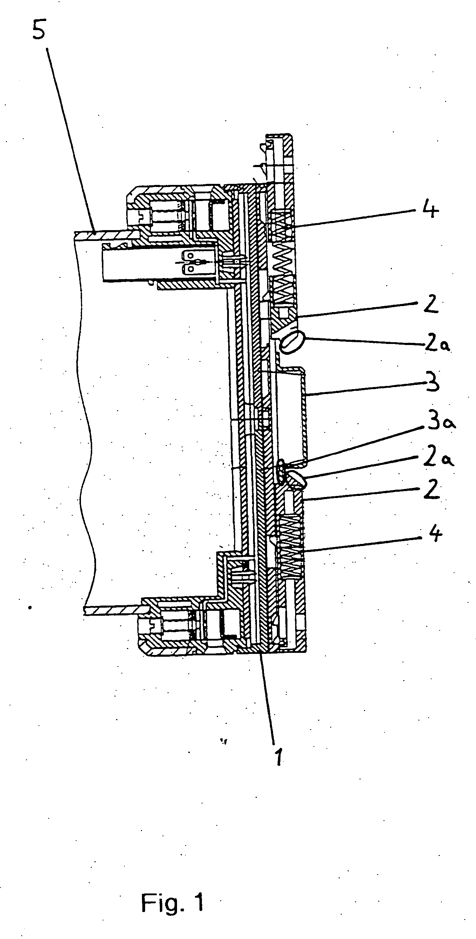

Fig. 1 zeigt eine gängige Klemmvorrichtung zur Befestigung eines Gerätegehäuses an einer Profilschiene. Die gezeigte Klemmvorrichtung weist eine Profilschienenklammer mit einem Schienenhalter 1 und zwei Klemmteilen 2 auf, bei der die Klemmteile 2 durch Führungsmittel 8 geführt auf dem Schienenhalter 1 entlang dessen Längsachse gleiten können. Die Klemmteile 2 befinden sich an zwei gegenüber liegenden Enden des Schienenhalters 1, wobei der zwischen den Klemmteilen 2 befindliche Abschnitt des Schienenhalters 1 zur Aufnahme der Profilschiene 3 dient und die beiden Klemmteile 2 durch Federn 4 in Richtung dieses Abschnitts gedrückt werden.

Zur Befestigung des Gerätegehäuses 5 an der Profilschiene 3 wird zunächst der Schienenhalter 1 am Gerätegehäuse 5 angebracht, z.B. durch Verschraubung, um danach den Schienenhalter 1 mit der die Klemmteile 2 aufweisenden Fläche an die Profilschiene 3 zu drücken. Durch die keilförmig geformten Vorderkanten 2a der Klemmteile 2 werden sodann die Klemmteile 2 entgegen der Federkräfte nach außen geschoben, um danach hinter den Profilschienenkanten 3a federbelastet nach innen zu schnappen und damit die Profilschiene 3 zangenartig zu erfassen.

Andere Ausführungsformen gängiger Klemmvorrichtungen besitzen lediglich ein federbelastetes Klemmteil, wobei das in Fig. 1 gezeigte obere Klemmteil meist durch ein Halteelement, bspw. ein oder mehrere Haken, ersetzt wird. Nachteilig bei Klemmvorrichtungen der in Fig. 1 gezeigten Art oder ähnlicher Ausführungsformen ist insbesondere die Notwendigkeit, die Klemmteile 2 zum Lösen des Gehäuses 5 entgegen der Federkraft aus ihrer Klemmstellung zu lösen und dort zu halten. Ebenso von Nachteil ist dort auch die Notwendigkeit der Schrägstellung des Gehäuses bei Verwendung nur eines federbelasteten Klemmteils in Kombination mit einem Halteelement bei Montage und Lösen des Gehäuses von der Profilschiene, was besonders bei größeren Gehäusen erschwert wird und den Bedarf an Hilfspersonen entstehen lässt.

Die erfindungsgemäße Klemmvorrichtung kann durch Verzicht auf Federn und damit der kontinuierlichen Vorspannung der Klemmteile die Probleme bei der Befestigung und beim Lösen des Gehäuses beheben.

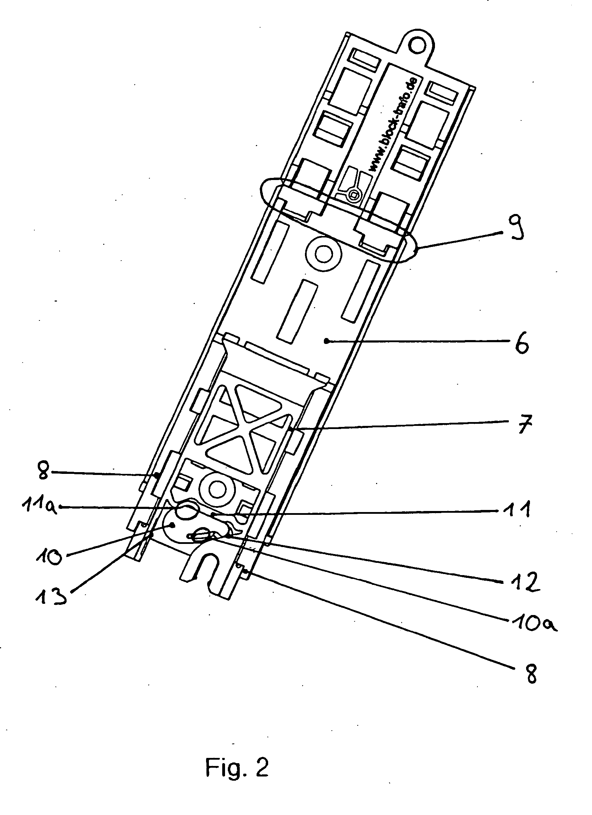

Die in Fig. 2 gezeigte Ausführungsform der erfindungsgemäßen Klemmvorrichtung weist einen Schienenhalter 6 und ein Klemmteil 7 auf. Die Klemmvorrichtung ist derart gestaltet, dass sie zur lösbaren Befestigung eines Gerätegehäuses an einer (hier nicht gezeigten) Profilschiene die Profilschiene zangenartig erfassen kann und das Klemmteil 7 hierzu in eine Öffnungsstellung und eine Klemmstellung gebracht werden kann. Hierzu weist der Schienenhalter 6 an einem unteren Abschnitt Führungsmittel 8 auf, durch die das Klemmteil 7 parallel zur Längsachse des Schienenhalters 6 geführt gleiten kann. Im Wesentlichen werden die Führungsmittel 8 in gezeigter Ausgestaltung durch seitlich am Schienenhalter 6 in Längsrichtung des Schienenhalters beidseitig erstreckende Stege gebildet, welche sich an der vom Schienenhalter abgewandten Fläche abschnittsweise in Richtung der Symmetrieebene des Schienenhalters ausdehnen und so einen abschnittsweise L-förmigen Querschnitt bilden.

Im zusammengebauten Zustand befindet sich das Klemmteil 7 zwischen den Führungsmitteln 8 und liegt mit einer Fläche auf dem Schienenhalter 6 auf. Die Vorderkante 7a des Klemmteils 7 ragt in den Abschnitt des Schienenhalters 6, der zur Aufnahme der Profilschiene dient. In diesem Bereich liegt am zum Klemmteil 7 gegenüber liegenden Ende ein Halteelement 9, welches in gezeigter Ausgestaltung durch zwei Haken gebildet wird, die in den die Profilschiene aufnehmenden Bereich zeigen. Das Halteelement 9 dient zum Einhaken der Klemmvorrichtung unter eine Kante der Profilschiene. Die Profilschiene wird beim Befestigen von der keilförmig gestalteten Vorderkante 7a des Klemmteils 7 und dem Halteelement 9 erfasst und festgeklemmt, indem sich die Klemmteilvorderkante 7a unter die Profilschiene schiebt.

Zum Erfassen der Profilschiene wird das Klemmteil 7 der erfindungsgemäßen Klemmvorrichtung in Richtung der Profilschiene geschoben, anstatt durch eine Feder wie bei gängigen Klemmvorrichtungen jedoch durch eine Nocke 10, die drehbar gelagert auf dem Schienenhalter 6 angeordnet ist. Hierzu weist das Klemmteil 7 in der gezeigten Ausgestaltung an seinem unteren Ende einen zu diesem Ende geöffneten Ausschnitt auf, der durch eine elastische Brücke 11 und seitliche Begrenzungsflächen 12 und 13 definiert wird. Die Nocke 10 ist bei zusammengebauter Klemmvorrichtung, wie in Fig. 2 ersichtlich, innerhalb dieses Ausschnitts drehbar gelagert angeordnet, wobei der Ausschnitt der Nocke als Kulisse zur Führung des Klemmteils 7 gegenüber der Nocke dient. Von den seitlichen Begrenzungsflächen 12 und 13 bildet die Begrenzungsfläche 12 dabei einen Endanschlag für die Nocke 10 zum Begrenzen ihres möglichen Drehwinkels. Die elastische Brücke 11 verbindet die seitlichen Begrenzungsflächen 12 und 13.

Wird die Nocke in Drehung versetzt, wird das Klemmteil 7 durch die Kraftübertragung in der Kulisse angetrieben und bewegt sich geführt durch die Führungsmittel 8 parallel zur Längsachse des Schienenhalters 6. Die Nocke rastet in die Rastkerbe 11a ein, die an der elastischen Brücke 11 angeordnet ist.

In Fig. 2 liegt die Nocke 10 an ihrem rechten Endanschlag, wobei das Klemmteil 7 seine geringstmögliche Auslenkung aufweist und sich damit in der Öffnungsstellung befindet. Die Vorderkante des Klemmteils 7a ist am weitesten von dem Abschnitt des Schienenhalters 6 entfernt, der die Profilschiene erfasst. Beim Erreichen der Öffnungsstellung rastet außerdem die Nockenspitze in die Rastkerbe 11 a in der elastischen Brücke 11 ein.

Zum Erreichen der Klemmstellung der Klemmvorrichtung wird die Nocke 10 unter Zuhilfenahme eines Werkzeuges gedreht. Dadurch erreicht das Klemmteil 7 seine maximale Auslenkung und seine Vorderkante 7a gelangt in den Abschnitt der Klemmvorrichtung, der die Profilschiene erfasst. Gleichzeitig rastet die Spitze der Nocke 10 in der linken Rastkerbe 11a der elastischen Brücke 11 ein. Beim Erfassen einer Profilschiene und Erreichen der Klemmstellung der Klemmvorrichtung schiebt sich die Vorderkante 7a des Klemmteils 7 unter eine Kante der Profilschiene.

Die Nocke 10 weist auf ihrer in Fig. 2 nicht sichtbaren Rückseite eine Vertiefung in Form eines Schlitzes zur Aufnahme eines Werkzeuges, z.B. eines Schraubendrehers, auf. Hierdurch kann die Nocke 10 durch ein von diesem Schlitz aufgenommenes Werkzeug in Drehung versetzt werden. Denkbar sind eine Reihe alternativer Möglichkeiten zur Aufnahme eines Werkzeugs bzw. zum Verdrehen der Nocke, wie etwa beliebige Innenprofile in (profilierten) Vertiefungen (Kreuzschlitz, Innensechskant, etc.) oder beliebige Außenprofile in (profilierten) Vorsprüngen (Sechskant, Rändelung zur manuellen Handhabung, etc.). In vorteilhafter Ausgestaltung nach Fig. 2-3 weist die Nocke 10 außerdem einen schmalen seitlichen Schlitz 10a auf, der zum Glätten des Verstelldrehmoments der Nocke und zum Bereitstellen einer gefühlsmäßigen Vorspannung zur Verbesserung der Handhabung dient.

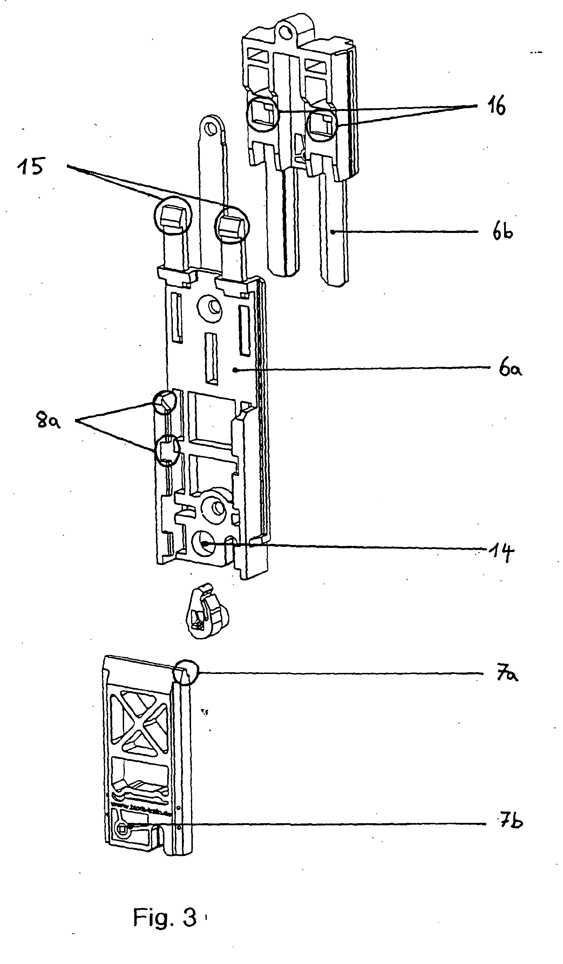

Wie in Fig. 3 erkennbar ist, kann der Schienenhalter 6 beispielsweise in ein Hauptteil 6a und ein Kopfteil 6b zerlegbar ausgestattet sein. Das Kopfteil 6b kann dadurch ohne Montagemittel in einem Kühlkörper fixiert und beispielsweise durch leichten mechanischen Druck auf Rastnasen 15 vom Hauptteil 6a getrennt werden, wobei die Rastnasen 15 sowie die zugehörigen Nuten 16 zur Verbindung des Kopfteils 6b mit dem Hauptteil 6a dienen.

Der Schienenhalter 6 weist außerdem mehrere Bohrungen auf, mit denen der Schienenhalter am Gerätegehäuse befestigt wird. In Fig. 2 sind die Bohrungen beispielhaft in Form von Senkbohrungen zur Aufnahme von Senkkopfschrauben realisiert.

Wie in Fig. 3 zu sehen, weist der Schienenhalter eine Bohrung 14 zur Aufnahme der Nocke 10 auf. Die Nocke besitzt in vorteilhafter Ausgestaltung auf ihrer Rückseite eine zylindrische Form, die in die Bohrung 14 zur Aufnahme der Nocke 10 passt.

Fig. 3 zeigt ferner in einer detaillierteren Darstellung den abschnittsweise L-förmigen Querschnitt 8a der Führungsmittel 8.

Um das Herausdrücken der Nocke 10 aus dem Schienenhalter 6 beim Drehen der Nocke oder beim Ansetzen des Werkzeugs zum Drehen der Nocke zu verhindern, weist das Klemmteil 7 in vorteilhafter Ausgestaltung am unteren Abschnitt über der Kulisse eine Abdeckung 7b auf, wie in Fig. 3 gezeigt ist.

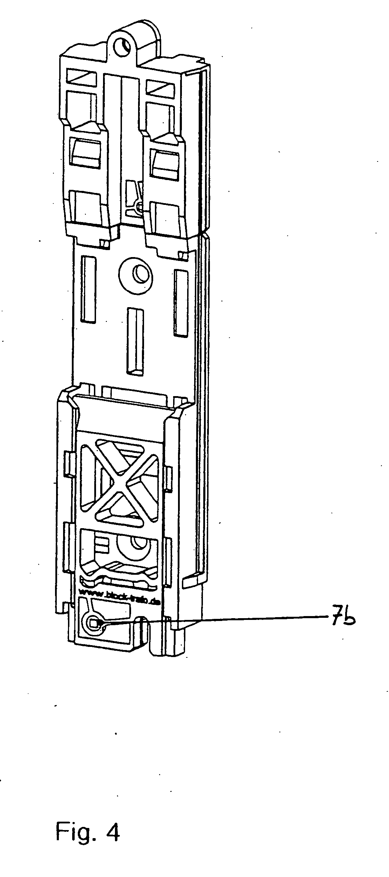

Fig. 4 zeigt die Klemmvorrichtung aus Fig. 3 in zusammengebautem Zustand. Die flache Form durch Anordnen des Schienenhalters 6, des Halteelements 9, des Klemmteils 7 und der Nocke 10 im wesentlichen in einer gemeinsamen Ebene (der Profilschienenebene) wird hier besonders deutlich. Im Vergleich zu herkömmlichen federgespannten Klemmvorrichtungen entsteht kein räumlicher Nachteil für die an die Profilschiene 17 zu befestigenden Geräte.

In Fig. 4 wird ferner dargestellt, dass die Kulisse mit der Abdeckung 7b lediglich auf der zum Schienenhalter 6 gewandten Seite geöffnet ist, so dass die Nocke bei zusammengebauter Klemmvorrichtung nicht mehr aus ihrer Bohrung 14 herausgedrückt werden kann.

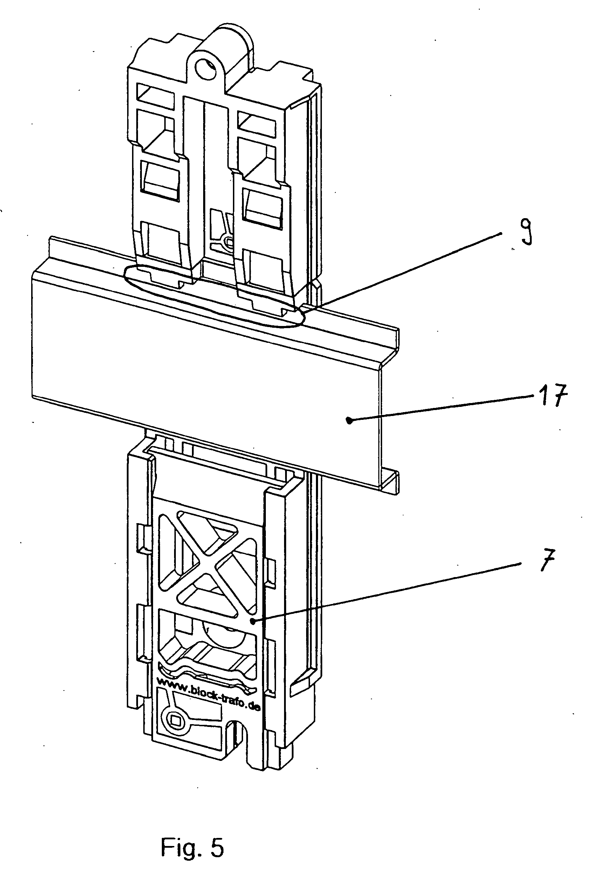

In Fig. 5 wird zudem eine vorteilhafte Klemmvorrichtung in zusammengebautem Zustand gezeigt, wobei das Halteelement 9 in eine Kante der Profilschiene 17 hakt und das Klemmteil 7 in seiner Öffnungsstellung liegt. Die Klemmvorrichtung kann in diesem Zustand leicht von der Profilschiene 17 ausgehakt oder durch Drehen der in dieser Figur verdeckten Nocke an der Profilschiene 17 fixiert werden.

Die gezeigten Ausführungsformen der erfindungsgemäßen Klemmvorrichtung sind nur beispielhaft und dienen der Erläuterung der beschriebenen Erfindung. Es sind eine Vielzahl weiterer Ausführungsformen möglich. Die Nocke 10 muss beispielsweise nicht die gezeigte eiförmige Form aufweisen, sondern es sind grundsätzlich alle Formen, z.B. Balken und Vielecke, geeignet, mit denen das Klemmteil durch eine Kulisse verschoben werden kann.

Des weiteren kann der Schienenhalter 6 jede andere Form annehmen, die es gestattet, ein Klemmteil geführt gleiten zu lassen und eine Nocke aufzunehmen. Die Teilung in ein Hauptteil 6a und ein Kopfteil 6b, die längliche Form, die Senkbohrungen, die Form der Führungsmittel und der gesamten Anordnung der in den Fig. 2-4 gezeigten Komponenten stellen lediglich Ausführungsbeispiele dar und dienen der Erläuterung.

Ebenso ist es denkbar, andere Einrichtungen zum Einrasten der Nocke in der Klemmstellung und Öffnungsstellung des Klemmteils vorzusehen. Eine elastische Brücke mit einer Rastkerbe ist auch hier nur eine beispielhafte Ausführung. Auch die Kulisse des Klemmteils, der Endanschlag und die Form der Oberflächen der Kulisse sind lediglich Ausführungsbeispiele.

Die Erfindung stellt somit eine Vorrichtung zur lösbaren Befestigung eines Gerätegehäuses an einer Profilschiene bereit, die an einer Wand- oder Bodenfläche angebracht ist. Dabei wird eine die Profilschiene zangenartig erfassende Klemmvorrichtung mit einem auf Führungsmitteln gleitenden Klemmteil verwendet, welches in eine Öffnungsstellung und eine Klemmstellung gebracht werden kann. Zum Herstellen einer sicheren, jedoch leicht lösbaren Verbindung wird eine drehbare Nocke in der Klemmvorrichtung so angeordnet, dass durch Drehen der Nocke das Klemmteil mit gleichbleibend geringem Kraftaufwand in seine Öffnungsstellung und seine Klemmstellung verschoben wird. Zum Befestigen des Gehäuses wird die Klemmvorrichtung mittels der Nocke in die Klemmstellung gebracht, wodurch die Profilschiene klemmend erfasst wird. Zum Lösen des Gehäuses wird die Klemmvorrichtung mittels der Nocke in seine Öffnungsstellung gebracht.

## Patentansprüche

1. Klemmvorrichtung zur lösbaren Befestigung eines Gerätegehäuses an einer Profilschiene, die an einer Wand- oder Bodenfläche angebracht ist, mit einer die Profilschiene zangenartig erfassenden Profilschienenklammer, welche einen Schienenhalter (6) mit Führungsmitteln (8), ein Halteelement (9) sowie ein Klemmteil (7) aufweist, wobei das Klemmteil (7) gegenüber dem Gerätegehäuse (5) durch die Führungsmittel (8) geführt in einer Profilschienenebene gleiten und in eine Klemmstellung und eine Öffnungsstellung gebracht werden kann,
**dadurch gekennzeichnet, dass** zum Verschieben des Klemmteils (7) in die Klemmstellung und die Öffnungsstellung an dem Schienenhalter (6) eine um eine senkrecht zur Profilschienenebene liegende Achse drehbare Nocke (10) angeordnet ist und ein Abschnitt des Klemmteils (7) als Kulisse zur Führung des Klemmteils (7) gegenüber der Nocke (10) ausgebildet ist.

2. Klemmvorrichtung nach Anspruch 1,
**dadurch gekennzeichnet, dass** die Nocke (10) auf der profilschienenabgewandten Seite einen Vorsprung oder eine Vertiefung, insbesondere einen Schlitz zur Aufnahme eines Hilfsmittels, zum Drehen der Nocke (10) um eine Achse senkrecht zur Profilschienenebene aufweist.

3. Klemmvorrichtung nach einem der vorstehenden Ansprüche,
**dadurch gekennzeichnet, dass** die Kulisse einen oder mehrere Endanschläge zum Begrenzen des Nockenwinkels auf einen vorbestimmten Bereich aufweist.

4. Klemmvorrichtung nach einem der vorstehenden Ansprüche,
**dadurch gekennzeichnet, dass** das Klemmteil (7) ein elastisches Brückenglied (11) mit einer oder mehreren Rastkerben (11 a) für die Nockenspitze aufweist, wobei die Nockenspitze beim Erreichen der Klemmstellung des Klemmteils in einer für diese Position bestimmten Rastkerbe (11a) einrastet.

5. Klemmvorrichtung nach einem der vorstehenden Ansprüche,
**dadurch gekennzeichnet, dass** die Nocke (10) zum Bereitstellen eines gleichmäßigen Nockenverstelldrehmoments geschlitzt ist.

6. Klemmvorrichtung nach einem der vorstehenden Ansprüche,
**dadurch gekennzeichnet, dass** der Schienenhalter (6), das Halteelement (9), das Klemmteil (7) und die Nocke (10) im Wesentlichen in der Profilschienenebene liegen.

## Claims

1. Clamping device for detachably fastening an apparatus housing to a profile rail attached to a wall surface or bottom, with a profile rail clamp which grips the profile rail in a tong-like manner and has a rail holder (6) with guide means (8), a holding element (9) and a clamping part (7), wherein the clamping part (7) can slide relative to the apparatus housing (5), guided by the guide means (8), in a profile rail plane and be brought into a clamping position and an opening position, **characterised in that** a cam (10), which can rotate about an axis lying perpendicular to the profile rail plane, is arranged on the rail holder (6) for displacing the clamping part (7) into the clamping position and the opening position, and a portion of the clamping part (7) is configured as a connecting member for guiding the clamping part (7) relative to the cam (10).

2. Clamping device according to Claim 1, **characterised in that** the cam (10) has on the side remote from the profile rail a projection or a recess, in particular a slot for receiving an auxiliary means, for rotating the cam (10) about an axis perpendicular to the profile rail plane.

3. Clamping device according to one of the preceding claims, **characterised in that** the connecting member has one or more end stops for limiting the angle of the cam to a predetermined range.

4. Clamping device according to one of the preceding claims, **characterised in that** the clamping part (7) has a resilient bridging member (11) with one or more detent notches (11a for the tip of the cam, the tip of the cam engaging, on reaching the clamping position of the clamping part, with a detent notch (11a) intended for this position.

5. Clamping device according to one of the preceding claims, **characterised in that** the cam (10) is slotted to provide a uniform cam adjustment torque.

6. Clamping device according to one of the preceding claims, **characterised in that** the rail holder (6), the holding element (9), the clamping part (7) and the cam (10) lie substantially in the profile rail plane.

## Revendications

1. Dispositif de serrage pour la fixation détachable d'un boîtier d'appareil sur un rail profilé qui est monté sur une surface murale ou une surface au sol, comprenant un serre-rail qui embrasse le rail profilé à la manière d'une pince et qui comprend un porte-rail (6) avec des moyens de guidage (9), un élément de maintien (9) ainsi qu'une partie de serrage (7), ladite partie de serrage (7) étant capable de coulisser par rapport au boîtier d'appareil dans un plan du rail profilé en étant guidée par les moyens de guidage et d'être amenée dans une position de serrage et dans une position d'ouverture,
**caractérisé en ce que**, pour déplacer la partie de serrage (7) jusque dans la position de serrage et jusque dans la position d'ouverture sur le porte-rail (6), une came (10) est agencée en rotation autour d'un axe perpendiculaire au plan du rail profilé, et un tronçon de la partie de serrage (7) est réalisé à titre de coulisseau pour guider la partie de serrage (7) par rapport à la came (10).

2. Dispositif de serrage selon la revendication 1,
**caractérisé en ce que** la came (10) présente, sur le côté détourné du rail profilé, une saillie ou un renfoncement, en particulier une fente pour recevoir un moyen auxiliaire afin de faire tourner la came (10) autour d'un axe perpendiculaire au plan du rail profilé

3. Dispositif de serrage selon l'une des revendications précédentes,
**caractérisé en ce que** le coulisseau comporte une ou plusieurs butées finales pour limiter l'angle de la came à une plage prédéterminée.

4. Dispositif de serrage selon l'une des revendications précédentes,
**caractérisé en ce que** la partie de serrage (7) comprend un élément élastique en forme de pontet (11) présentant une ou plusieurs encoches d'enclenchement (11a) pour la pointe de la came, ladite pointe venant s'enclencher, lorsqu'elle atteint la position de serrage de la partie de serrage, dans une encoche d'enclenchement (11a) prévue pour cette position.

5. Dispositif de serrage selon l'une des revendications précédentes,
**caractérisé en ce que** la came (10) est fendue pour procurer un couple de rotation régulier pour le mouvement de la came.

6. Dispositif de serrage selon l'une des revendications précédentes,
**caractérisé en ce que** le porte-rail (6), l'élément de maintien (9), la partie de serrage (7) et la came (10) sont situés sensiblement dans le plan du rail profilé.
